Europäisches Patentamt

European Patent Office

Office européen des brevets

(11) Publication number: **0 497 408 A1**

# EUROPEAN PATENT APPLICATION

(21) Application number: **92200177.1**

(22) Date of filing: **23.01.92**

(51) Int. Cl.⁵: **B62D 7/22**

(30) Priority: **28.01.91 BE 9100070**

(43) Date of publication of application:
**05.08.92 Bulletin 92/32**

(84) Designated Contracting States:
**AT BE CH DE ES FR GB IT LI LU NL SE**

(71) Applicant: **VOLVO CAR SINT-TRUIDEN,**
**naamloze vennootschap**
**Rellestraat 2**
**B-3800 Sint-Truiden(BE)**

(72) Inventor: **Kester, Wim**
**Speeldries 4**
**NL-5521 GG Eersel(NL)**
Inventor: **Debroux, Patrick**
**Truyerstraat 35**
**B-3870 Heers(BE)**

(74) Representative: **Donné, Eddy**
**Bureau M.F.J. Bockstael nv Arenbergstraat**
**13**
**B-2000 Antwerpen(BE)**

(54) **Steering gear for vehicles.**

(57) Steering-gear for vehicles of the type whereby use is made of a steering rack (9) with a corresponding pinion (10), characterized in that at the free end (15) of the pinion shaft (4) a friction device (14) has been installed consisting of at least two friction elements (16,17) which are permanently pressed together axially, of which one has been locked so as to keep it from turning and the other turns in conjunction with the pinion shaft (4).

Fig. 8

The present invention concerns a steering-gear for vehicles, in particular a steering-gear of the type whereby the turning of the steering wheel via a steering rack with the corresponding pinion is converted into a movement of the cross rod.

It is known that in vehicles the road bumps can be felt at the steering wheel. When these road bumps come through very strongly, they create a feeling of a certain nervous steering, and this in proportion to the vehicle speed.

This adverse effect is especially noticed in vehicles with front-wheel drive, and in vehicles in which a steering-gear with a steering rack with variable gear teeth is used.

In the first case said disadvantage is increased as the front wheels of vehicles with front-wheel drive are usually more heavily loaded.

In order to make a too heavy load on the steering axle be felt less when parking the vehicle, use can be made as mentioned above of a steering rack with a variable transmission ratio. This is specific in that the geometry of the gear teeth, and in particular the direction and the pressure angle of the gear teeth are variable as one moves from the centre of the steering rack to the extreme positions.

This specific gear teeth geometry has a positive influence on the parking forces to be executed, but is disadvantageous in that road bumps are felt more strongly at the steering wheel when driving.

Also, the present invention aims a steering-gear whereby the influence from road bumps on the steering-wheel is minimized.

According to the invention use is made of a device which causes an additional friction in the steering-gear, whereby said friction has an almost constant value during the complete life span of the vehicle.

The invention also aims a steering-gear whereby the friction device has been built-in such that it can easily be dismounted in case of a defect, or in case a friction device with other features needs to be installed.

To this end the invention concerns a steering-gear for vehicles of the type whereby use is made of a steering rack with a corresponding pinion, characterized in that a friction device has been provided at the free end of the pinion shaft which is made up of at least two axial friction elements which are permanently pressed together, of which one has been locked so as to keep it from turning and whereby the other turns in conjunction with the pinion shaft.

According to a particular embodiment, use is made of a friction device whereby the contact area of at least one of the friction elements is made of a synthetic-based material, to which a metal-based product has been preferably added. In preference however, the other friction element has a metal contact area. The use of these materials is advantageous in that the so-called "stick-slip" behaviour, in other words the increased friction which has to be overcome at the transition from standstill to movement, is practically non-existing.

In order to better explain the characteristics according to the invention, the following preferred embodiment is described as an example only and without being limitative in any way with reference to the accompanying drawings, where:

figure 1 shows a steering-gear according to the invention;

figure 2 is a schematic representation of a steering rack with variable transmission ratio;

figure 3 shows a cross-section according to line III-III in figure 2;

figures 4 and 5 are schematic representations of the interconnection between the pinion and the steering rack, respectively at the position indicated in figure 2 with F4 and F5;

figure 6 shows the movement of the cross rod as a function of the angular rotation of the steering wheel for steering-gears which use a steering rack with a corresponding pinion;

figure 7 shows the coupling to be executed as a function of the angular rotation of the steering wheel for steering-gears which use a steering rack with a corresponding pinion;

figure 8 shows a cross section according to line VIII-VIII in figure 1;

figure 9 shows a view in perspective of the element which is indicated in figure 8 by F9.

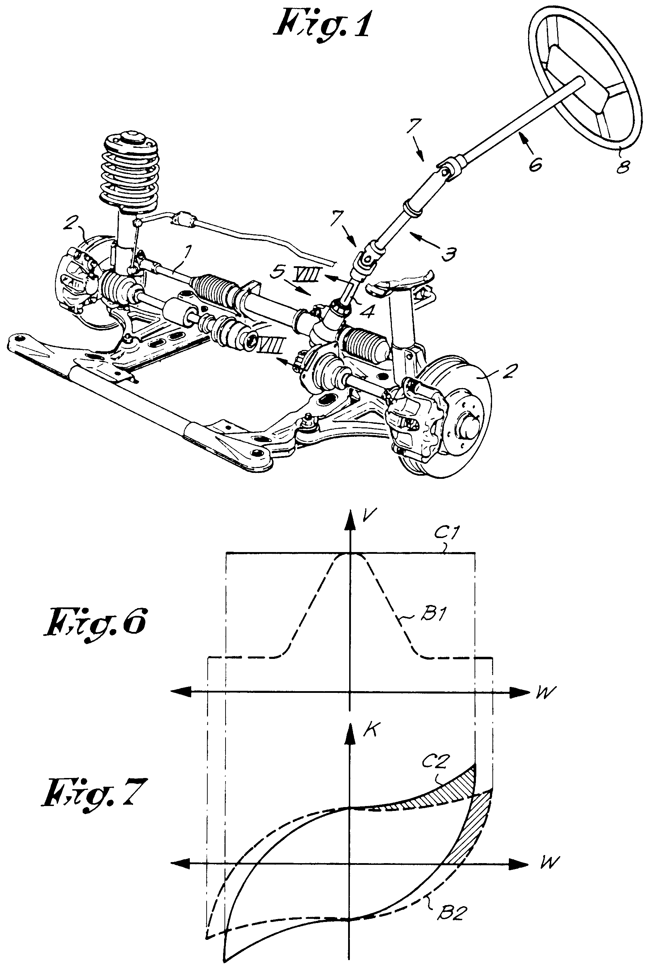

As shown in figure 1 the steering-gear mainly consists of a cross rod 1 which is coupled to the wheels 2; an intermediate shaft 3 which usually consists of several parts; a pinion shaft 4 borne in the steering house 5; and a steering shaft 6, whereby these shafts are connected to one another by means of cardan couplings 7 and whereby the steering shaft 6 is provided at its free end with a steering wheel 8.

The transmission in the steering house 5 is formed by means of the interconnection between a pinion that is fixed on the pinion shaft 4 or forms one part with it and a steering rack coupled to the cross rod 1. Hereby, use can be made of a steering rack with a transmission ratio which is either or not variable.

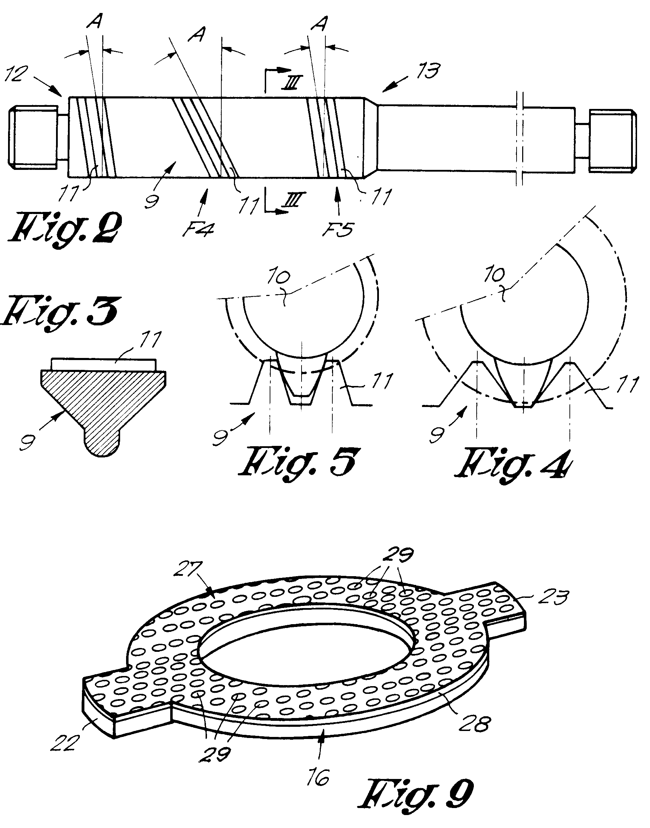

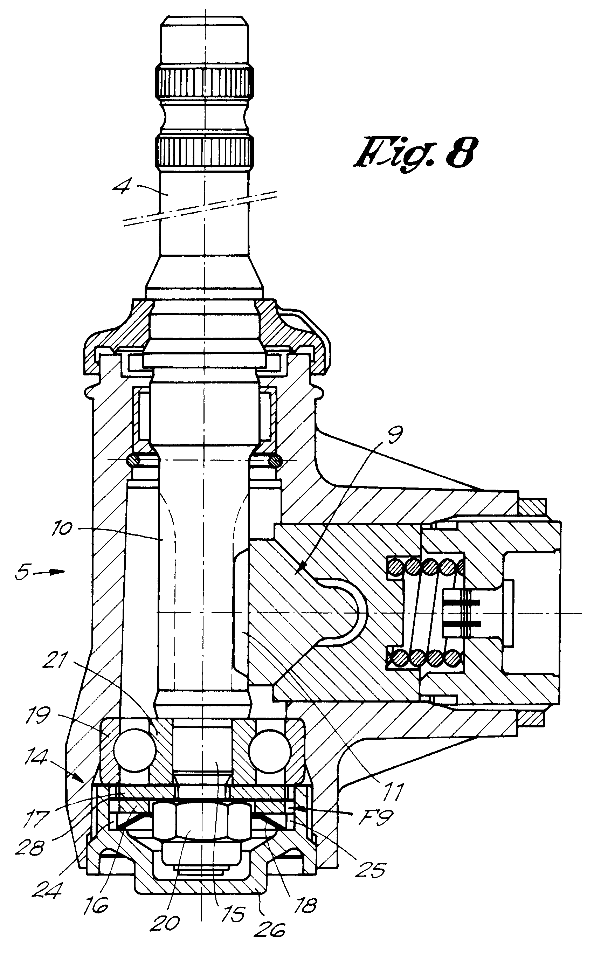

Figures 2 to 5 are schematic representations of a steering rack 9 with a variable transmission ratio and a corresponding pinion 10. As shown in the figures 2, 4 and 5, the geometry of the gear teeth 11 is variable from the centre of the steering rack 9 towards the ends 12 and 13, whereby this variation is symmetrical with regard to the left and right direction. Said variation of the gear teeth geometry is related to the gear teeth direction A, as well as to the pressure angle of the gear teeth 11.

In short, the transmission ratio of the steering rack is larger in the centre than near the ends 12 and 13. This results in a movement V of the cross rod 1 as a function of the angular rotation W of the steering wheel 8 as indicated by means of the curve B1 in figure 6. The couple K to be executed when parking as a function of said angular rotation W is shown in figure 7 by means of the curve B2.

In the case where a steering rack with a constant transmission ratio is used, the above-mentioned characteristics show a course as indicated by means of the curves C1 and C2.

When comparing the curves B2 and C2 it becomes clear that in the extreme positions a smaller couple K must be exercised in case a steering rack with variable transmission ratio is used.

A disadvantage however consists in that a transmission using a steering rack with variable gear teeth, due to the specific pressure angles, shows a relatively high steering house efficiency in the intermediate position, in proportion to a steering rack with a traditional gear teeth geometry, and as known this results in the effect that road bumps are felt more strongly at the steering wheel 8.

In order to compensate for these disadvantageous effects, a friction device 14 has been applied in the steering house 5 according to the invention, which as shown in figure 8 is situated at the free end 15 of the pinion shaft 4 and which mainly consists of at least two friction elements 16 and 17 which are permanently pressed together axially, of which one, in this case the friction element 16, has been locked so as to keep it from turning and the other, in this case the friction element 17, turns in conjunction with the pinion shaft 4.

In the shown example the friction elements 16 and 17 consist of annular disks which are pressed together by means of flexible means 18.

The friction element 17 is preferably mounted against a ball bearing 19 of the steering house 5, one and other such that this element turns in conjunction with the pinion shaft 4. In the example shown in figure 8, this is obtained because the friction element 17 is clamped by means of a nut 20, screwed on the end 15, against the part 21 of the ball bearing 19 turning in conjunction with the pinion shaft 4.

As shown in figure 9 the friction element 16 has at least one, but preferably two lip-shaped protrusions 22 and 23 which make it possible to lock this friction element 16 so as to keep it from turning, but to mount it in the steering house 5 such that it can move axially. As shown in figure 8 these protrusions 22 and 23 fit in axial grooves 24 and 25 which have been applied in an immobile part of the steering house 5.

Preferably, the whole is made such that the friction device 14 can be dismounted at the free end 15, such that the steering house does not need to be entirely disassembled and the transmission between the pinion 10 and the steering rack 9 does need to be interrupted. To this end the steering house 5 has been provided with a removable part 26, for example in the shape of a screw cap. The above-mentioned grooves 24 and 25 are preferably applied in the inner side of this part 26.

The contact area of at least one of the friction elements 16 and 17 is preferably made of a synthetic-based material. In the shown example the friction element 16 has been provided to this end at its contact surface 27 with a coating 28 made of such material.

Said material preferably consists of PTFE (polytetrafluoroethylene). A metal-based product, such as fine metal particles or metal oxide, is preferably added to this material.

These materials are advantageous in that the caused friction is optimal in order to obtain that bumps are minimally passed on to the steering wheel 8; that the friction value is almost constant during the complete life span of the vehicle; and that the friction does not have too high a starting value and causes almost no "stick-slip" behaviour.

In order to obtain a very great press-on force, without a large mounting space being required for the flexible means 18, use is preferably made for the latter of a cupped spring washer.

In order to obtain said optimal conjunction between the friction elements 16 and 17, at least one of the friction elements, in this case the friction element 16, preferably shows a contact area 27 provided with a number of recesses 29, forming little reservoirs for a lubricant. These recesses 29 are preferably provided in the coating 28 applied on the friction element 16.

It is obvious that the steering house 5, or at least the friction device 14, is preferably lubricated.

In preference one of the friction elements has a metal contact area. In the shown example the friction element 17 has been entirely made of steel to this end.

Although the steering-gear according to the invention, and especially the friction device 14, proves to be most useful in front-wheel driven cars using a steering rack with variable gear teeth, it is clear that it can also be used for other vehicles making use of a steering transmission by means of a steering rack and a corresponding pinion.

The present invention is in no way limited to the embodiment described by way of example and shown in the accompanying drawings; on the contrary, such a steering-gear can be made in various forms and dimensions while still remaining within the scope of the invention.

**Claims**

**EP 0 497 408 A1**

1. Steering-gear for vehicles of the type whereby use is made of a steering rack (9) with a corresponding pinion (10), characterized in that at the free end (15) of the pinion shaft (4) a friction device (14) has been installed consisting of at least two friction elements (16,17) which are permanently pressed together axially, of which one has been locked so as to keep it from turning and the other turns in conjunction with the pinion shaft (4).

2. Steering-gear according to claim 1, characterized in that the contact area (27) of at least one of the friction elements (16,17) is made of a synthetic-based material.

3. Steering-gear according to claim 2, characterized in that a metal-based product has been added to the synthetic material.

4. Steering-gear according to claim 2 or 3, characterized in that one of both friction elements (17) has a metal contact area.

5. Steering-gear according to any of the above claims, characterized in that the friction device (14) can be dismounted at the free end (15) of the pinion shaft (4).

6. Steering-gear according to any of the above claims, characterized in that the friction elements (16,17) consist of annular disks.

7. Steering-gear according to any of the above claims, characterized in that the friction elements (16,17) are pressed together by means of flexible means (18).

8. Steering-gear according to claim 7, characterized in that the flexible means (18) consist of a cupped spring washer.

9. Steering-gear according to any of the above claims, characterized in that at least one of the friction elements (16,17) has been provided with recesses (29) at its contact area (27).

10. Steering-gear according to claim 9, characterized in that the recesses (29) have been provided in a coating (28) which has been applied on the friction element (16) in question.

11. Steering-gear according to any of the above claims, characterized in that the friction device (14) has been lubricated.

12. Steering-gear according to any of the above claims, characterized in that the pinion shaft (4) is borne at its free end (15) in a ball bearing (19) and in that the friction element (17) turning in conjunction with the pinion shaft (4) is clamped by means of a nut (20), screwed on the free end (15), against the part (21) of the ball bearing (19) turning in conjunction with the pinion shaft (4).

13. Steering-gear according to any of the above claims, characterized in that the friction element (16) which has been locked so as to keep it from turning can be moved axially and has been provided with at least one protrusion (22,23) with which it acts onto a groove (24,25) in an immobile part of the steering house (5).

# *Fig.1*

# *Fig.6*

# *Fig.7*

Fig. 2

Fig. 3

Fig. 5

Fig. 4

Fig. 9

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 601 168 (ZAHNRADFABRIK FRIEDRICHSHAFEN) | 1,2,4, 6-8,13 | B62D7/22 |
|  | * the whole document * |  |  |
| Y |  | 3,5,9-11 |  |
| Y | PATENT ABSTRACTS OF JAPAN vol. 14, no. 127 (0947) 9 March 1990 & JP-A-01 320 329 ( SUMITOMO ELECTRIC IND. ) 26 December  1989 * the whole document * | 3 |  |
| Y | DE-A-3 703 591 (AUDI) * column 2, line 56 - line 61; figure 1 * | 5 |  |
| Y | PATENT ABSTRACTS OF JAPAN vol. 11, no. 188 17 June 1987 & JP-A-62 016 113 ( SUZUKI HIDEO ) 24 January 1987 * the whole document * | 9,10 |  |
| Y | GB-A-941 680 (LEWIS) * page 2, line 55 - line 75; figures 1,2 * | 11 | TECHNICAL FIELDS SEARCHED (Int. Cl.5) |
| A | DE-U-7 417 609 (METABOWERKE) * page 2, paragraph 3; claim 9; figures * | 9 | B62D |

The present search report has been drawn up for all claims

| Place of search | Date of completion of the search | Examiner |
|---|---|---|
| THE HAGUE | 08 MAY 1992 | HAGEMAN M. |